# EUROPEAN PATENT SPECIFICATION

(11) **EP 2 464 990 B1**
(45) Date of publication and mention of the grant of the patent: **03.09.2014**
(21) Application number: 09765284.6
(22) Date of filing: 15.06.2009
(51) Int. Cl.: G01S 13/90, G01S 13/02, H01Q 19/30, H01Q 1/28

(54) **ASYMMETRICAL THREE-DIMENSIONAL RADIATING SYSTEM**
ASYMMETRISCHES DREIDIMENSIONALES STRAHLUNGSSYSTEM
SYSTÈME RAYONNANT TRIDIMENSIONNEL ASYMÉTRIQUE

(30) Priority: 18.06.2008 BR PI0802273
(43) Date of publication of application: 20.06.2012
(73) Proprietor: Orbisat Da Amazônia Indústria E Aerolevantamento S/A, 69065-130 Manaus AM (BR)
(72) Inventor: MOREIRA NETO, João Roberto, 13279-080 Valinhos - SP (BR); HERNÁNDEZ FIGUEROA, Hugo Enrique, 13082-703 Campinas - SP (BR); REIS, Edson Cesar dos, 05469-000 São Paulo (BR); CERQUEIRA SODRÉ JÚNIOR, Arismar, 13083-220 Campinas/SP (BR); RODRIGUES BRIANEZE, Juliano, 13087-010 Campinas - SP (BR)
(74) Representative: Ramos Lucas, Maria Manuel
(86) International application number: PCT/BR2009/000173
(87) International publication number: WO 2009/152596

(56) References cited:
- US-A- 5 557 282
- US-A1- 2007 103 377
- US-A1- 2007 132 650
- US-A1- 2007 229 379

## Description

### Field of the Invention

The present invention relates to the mapping of terrain carried out by aircrafts equipped with a radar system and, more particularly, the optimization of the antenna radiation patterns through the use of modified radiating systems.

### Background of the invention

The need to map large areas of land within a limited period of time has led to the adoption of techniques based on scans of terrain made from platforms located in high positions in relation to the area to be mapped. One of these techniques is based on the use of Aerial Photography, which captures through a camera, at least two images, taken from different points, which are then interpolated by means of specific equipment so as to provide topographic data and digital elevation model for the area of interest. The disadvantage of the use of visual techniques is that they dependent on weather conditions, mainly on the absence of clouds between the camera and the ground. Depending on the region and the time of year, the performance can last too long. Moreover, the taking of photographic images can only be done during the day, and even then, in times when there are no pronounced shadows.

The use of radar waves to carry out such surveys is highly advantageous, since the propagation of electromagnetic waves in certain frequency ranges is not affected by weather conditions. Moreover, given the fact that radar systems come with own "illumination", the surveys can be done both during the day and at night.

The accuracy of the images obtained by radar depends on the size of the antenna used, i.e., larger antennas (in terms of wavelength) provide more detailed images. Thus, for a given physical size of the antenna, the use of higher frequencies would result in a "larger" antenna in terms of wavelength. However, the propagation of electromagnetic signals of higher frequencies may be hampered by weather conditions, such as, for example, excessive moisture in the air. If the data assessment is done by radar using traditional techniques, it results in an unsatisfactory level of image quality, because the size of the antennas is limited by the size of the aircraft that carries the equipment. A solution that enables to deal with this limitation is the use of synthetic aperture techniques, known by the acronym SAR (Synthetic Aperture Radar). This technique is based on the movement of the radar antenna along a defined trajectory, during which successive radar signals are emitted and returning echoes are received, which are then processed by computer techniques to provide high resolution images.

The use of the SAR technique allows us to install the antennas and radar equipment in small or medium size aircrafts, since the accuracy of the mapping is regardless of the physical dimensions of the antennas used.

Mappings carried out with the SAR technique includes, therefore, a series of flight paths in parallel, covering the area of interest, and a subsequent processing of collected signals.

In a conventional SAR system, the antenna radiates in the vertical direction, and the terrain dimensions covered depend on the width of the radiation beam used. The inherent limitations in such a system reduce the range of area that can be scanned at each flight so as to demand a lot of parallel flights to the mapping of the area of interest.

Using two systems with the radiant beams pointing to the sides of the flight path would increase the width of the strip of the terrain covered in each passage, reducing the number of passages and thus the time needed to complete the mapping. This solution leads to the problem that radiant systems require high directionality to avoid mutual interference of the echoes received by both antennas, this condition is quite difficult to be obtained in airborne systems, since the size of the aircraft limits the physical size of antennas, and hence their directivity.

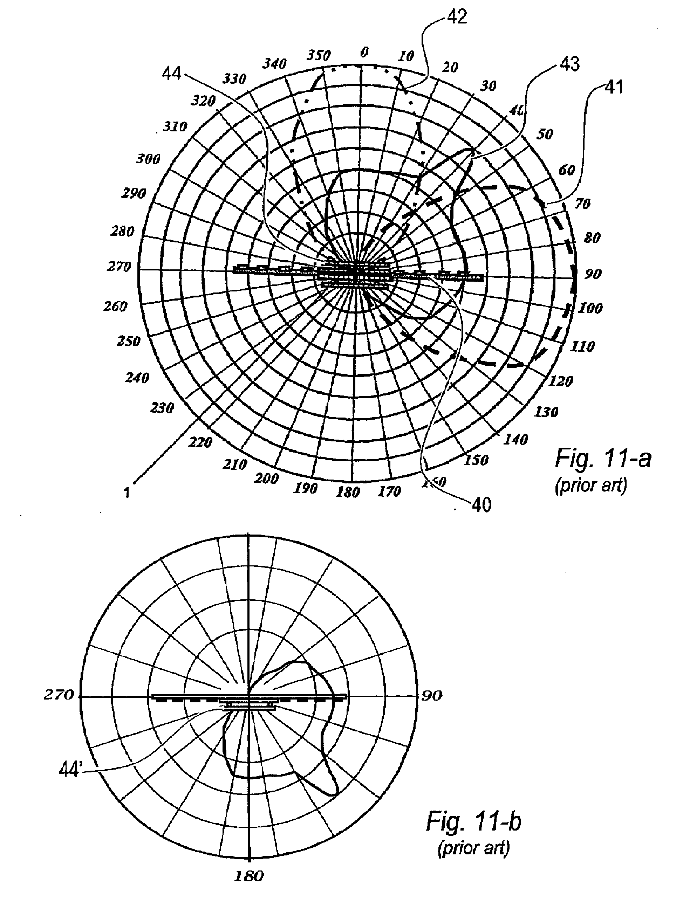

Patent Application Publication US2007103377 *Antenna System with a Controlled Directional Pattern, a Transceiver and a Network Portable Computer* describes a system comprising a flat substrate (2) on the surface of which two flat Yagi antennas (3) oriented in opposite directions are formed by printing, each one comprising a driven dipole (4) a reflector (5) and at least two directors (7). The directional pattern in the vertical plane is modified by assembling an additional antenna (44) on top of said substrate (2) as shown in Figure 11-a. When one of said Yagi antennas (40) is simultaneously switched on with the additional antenna (44) the corresponding radiation patterns, respectively (41) and (42) will combine into an asymmetrical radiation pattern (43) in which there is no signal radiated toward the ground. However, most of the radiated power is directed above the horizon, rendering this signal useless for radar surveying purposes. If the antenna is vertically inverted, a radiation pattern such as shown in Figure 11-b will result. Notwithstanding the fact that now most of the radiated power is concentrated below the horizon, there is a substantial amount of signal beamed toward the ground (at 180°) which will result in mutual interference between the signals received by the right-pointing and the left-pointing antennas.

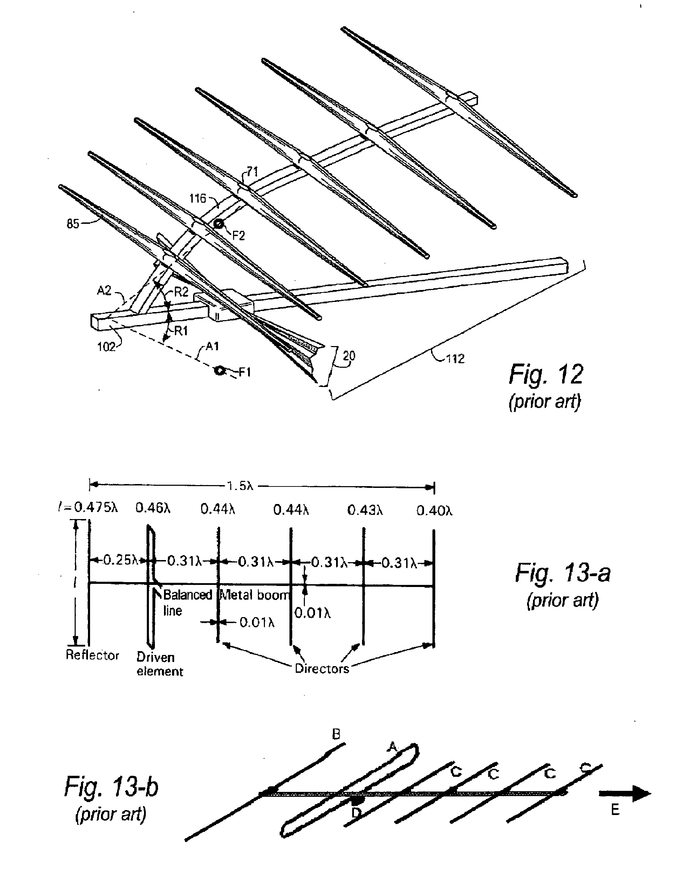

Patent Application Publication US2007229379 *Digital UHF*/*VHF Antenna* teaches a Digital UHF/VHF (DUV) Antenna configured for DTV reception in the VHF range of 174 MHz to 216 MHz, and in the UHF range of 470 MHz to 698 MHz, having a peak gain along a X axis. As shown in Figure 12, it comprises a driven dipole (20) and a set of multiple reflectors (85) placed along a curved booster boom (116) and transverse to it; the boom being shaped like a parabola in a plane perpendicular to said driven dipole (20), the booster's parabolic axis making an angle (R1, R2) between about ten degrees and fifty degrees with the X axis. For clarity reasons, the figure shows only the upper set of reflectors, it being understood that the antenna is conformed as a modified corner reflector antenna, whereby the curved shape of the reflectors enhances the directivity of the antenna, the directional pattern in the vertical plane being symmetrical, which is not the best shape for radar mapping techniques.

### Objects of the invention

In view of the above, the object of the instant invention is to provide radiating systems in with directional features are better adapted to SAR applications than the systems known in the existing art.

Another object is the provision of antennas having a relatively small size, allowing its attachment to small or medium-sized aircraft.

### Summary of the invention

The above objects are achieved by means as set out in claim 1.

According to another feature of the invention, the reflector of each antenna consists of a substantially flat conductive surface

According to another feature of the invention, the dipole element of each antenna is fed by a balanced transmission line comprising two conductors parallel to the antenna's longitudinal axis, the proximal ends of said conductors being connected to the balanced terminals of a microstrip balun such as commonly used in the Quasi-Yagi planar antennas (QY).

According to another feature of the invention, said balun is turned down 90° in relation to the longitudinal axis of the antenna and is modified to be more compact than the equivalent used in a Quasi-Yagi (QY) antenna.

According to another feature of the invention, the driven dipole element as well as the directors consist of cylindrical metallic rods.

According to another feature of the invention said reflector surface is substantially vertical, the longitudinal axis of the antenna being perpendicular to said surface and lying in a substantially horizontal direction.

According to another feature of the invention the resulting three-dimensional antenna structure produces an asymmetrical vertical radiation pattern and a substantially symmetrical pattern in the azimuthal plane.

According to another feature of the invention the asymmetry of the vertical radiation pattern is provided by the gradual vertical divergence of the director elements positions in relation to the antenna's longitudinal axis.

According to another feature of the invention said antennas are located on opposite sides of the fuselage of an aircraft used as a platform, with their longitudinal axes pointing in opposite horizontal directions traverse to the aircraft's longitudinal axis.

According to another feature of the invention said radiating systems define a minimum of the vertical radiation pattern towards the ground.

### Brief description of the drawings

The foregoing and other objects, features aspects and advantages of the invention will become more evident through the description of a preferred embodiment, given as a non-limiting example and the corresponding figures, in which:
Figure 1 illustrates the radiating set comprising two radiating systems attached to the fuselage of an aircraft.
Figure 2 shows in greater detail one of said radiating systems.
Figure 3 depicts one of the antennas as seen from above.
Figure 4 is a side view of the antenna shown in the previous figure.
Figure 5 illustrates in detail the balun associated with each antenna
Figure 6 shows the width of the radiated beam as a function of frequency, both in azimuth and in elevation.
Figure 7 is the radiation pattern in elevation, for a frequency of 400MHz.
Figure 8 depicts the rejection curves of the antenna shown in figures 1 to 4, for angles between 20° and 70° and signals of three different frequencies.
Figure 9 illustrates the antenna gain for three different arrangements of the director elements.
Figure 10 is a side view of the directors' positions related to the longitudinal axis of the antenna, for a specific embodiment of the invention.
Figures 11-a and 11-b show two vertical radiation patterns for a previous art system comprising Yagi antennas formed by printing on a flat substrate associated with an additional antenna mounted on top of said substrate.
Figure 12 shows a previous art antenna configured for DTV reception in the VHF range of 174 MHz to 216 MHz, and in the UHF range of 470 MHz to 698 MHz.
Figures 13-a and 13-b are two views of a conventional Yagi-Uda antenna, as known in the previous art.

### Detailed description of a preferred embodiment

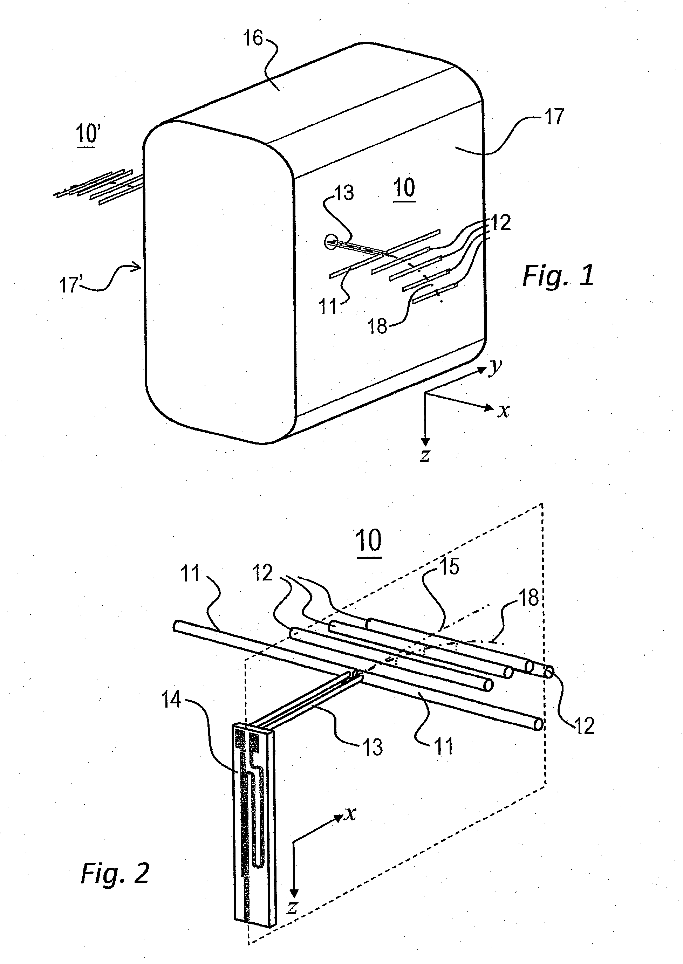

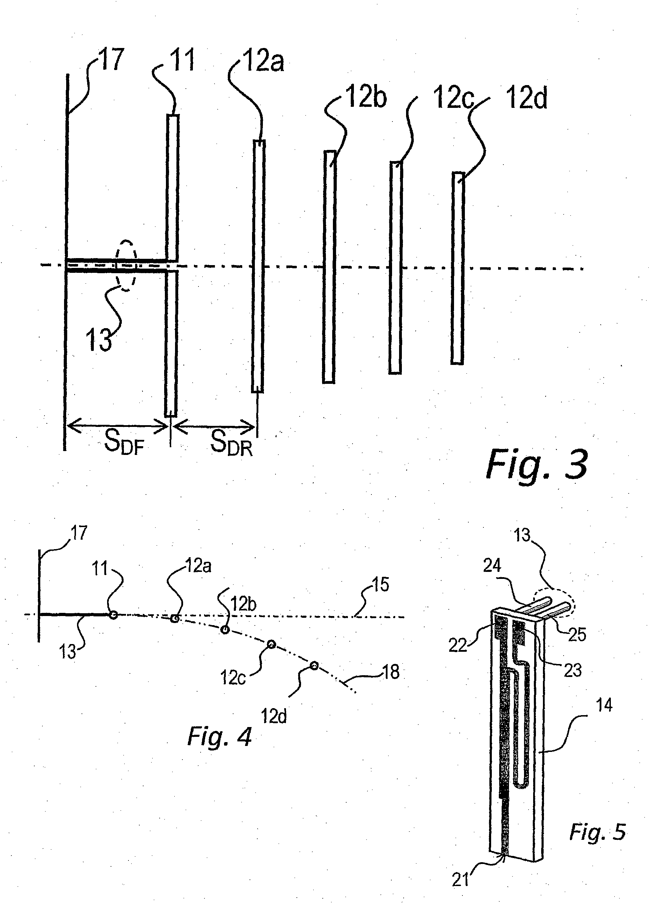

Referring now to Figures 1 and 2, the instant invention comprises antennas 10 and 10' installed on the lateral sides 17 and 17' of an aircraft fuselage 16. Each antenna comprises a half-wave dipole consisting of two collinear rods 11 having each one a length of λ/4, fed by a balanced transmission line 13 formed by two parallel conductors 24 and 25, as shown in greater detail in Fig. 5.

As seen in Fig. 5, said parallel conductors are fed from a balun 14, which consists of printed circuit lines on an insulated substrate having sufficient strength and rigidity to provide mechanical support for said conductors. The unbalanced signal is fed into end 21 of the balun, and the balanced signals appear at terminals 22 and 23, which are connected to the proximal ends of conductors 24 and 25.

As shown in Fig. 2, transmission line 13 is parallel to the longitudinal axis of each antenna 10 and 10'. The proximal portion of each antenna coincides with the orientation of longitudinal axis 15, i.e., it is directed substantially perpendicularly to sides 17 or 17' in which the antenna is installed. In other words, axes 15 are substantially horizontal and point to opposite directions.

Figure 13-a replicates Fig 11-41b of page 483 of J. D. Kraus' textbook Antennas, 2nd edition, depicting a plan view of the well-known Yagi-Uda antenna, while Fig. 13-b is a perspective view of the same antenna. As shown in these drawings, it comprises a driven element (A in Fig. 13-b), usually a λ/2 dipole either folded or straight, fed by a balanced line, a parasitic element B somewhat longer than the driven element and a plurality of parasitic elements C somewhat shorter than said driven element, all elements consisting of metallic conductors supported by a straight boom which also defines the longitudinal axis of the antenna. Element B acts as a reflector, i.e., provides a power gain away from the element, while elements C are directors, providing a power gain in direction E, coincident with said longitudinal axis.

The invention mainly consists in modifying the conventional layout of the Yagi-Uda antenna so that the directors do not lie in the same plane as the driven dipole and the longitudinal axis. As shown in figures 1, 2 and 4, the elements laying beyond the driven dipole 11 - i.e., the directors are situated progressively farther away from said horizontal axis 15, their positions being defined by the curved axis 18, whose proximal portion is tangent to longitudinal axis 15, while the distal portion of axis 18 arches downward.

Figures 3 and 4 depict each antenna in greater detail; it is possible to observe that only the driver element 11 is fed by the balanced transmission line 13. Metallic rods 12a, 12b, 12c and 12d are parasitic elements, i.e., directors, and their positions differ from that used in conventional YU antennas of Figures 13-a and 13-b because they are increasingly farther away in the vertical direction from the longitudinal axis 15, as shown in side view in Figure 4. Due to the fact that the directors are placed along downward curved axis 18, an asymmetry in the vertical radiation pattern is produced, so that the maximum gain is shifted down instead of being coincident with the direction of the longitudinal axis 15.

This gradual sloping of the directors positions in relation to the main longitudinal axis 15 brings about an innovative effect, to wit, redirecting the radiation pattern as well as increasing its maximum gain while, at the same time, the radiation below the aircraft is decreased. On the other hand, the effects of the arrangement shown in Figures 3 and 4 are negligible as regards the return loss of the antenna.

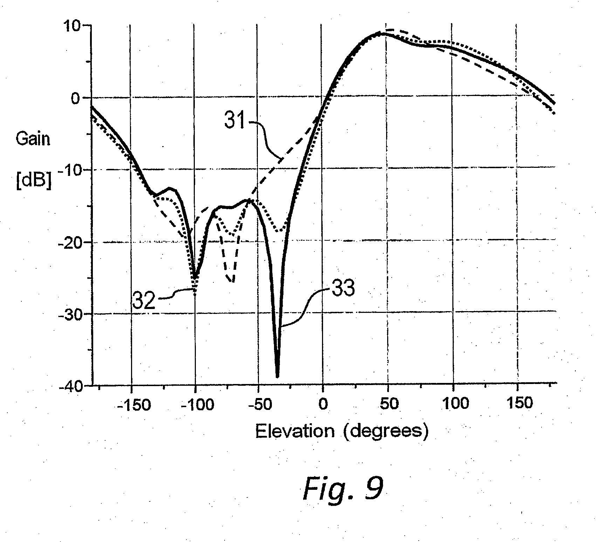

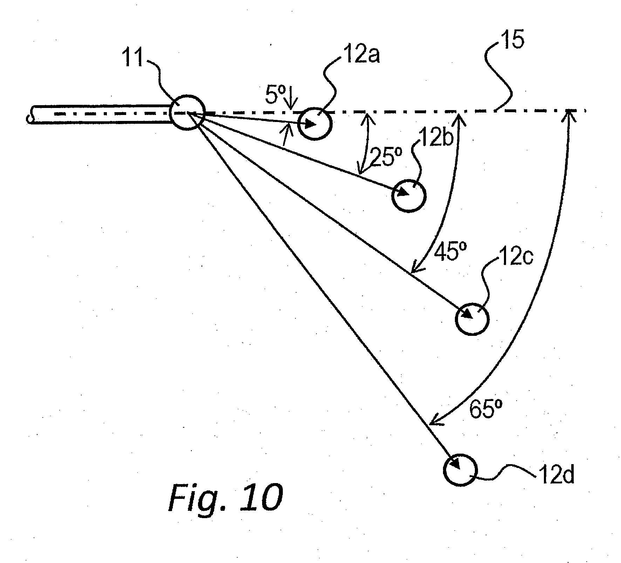

The diagram in Figure 9 shows the influence of the directors' displacement on the vertical radiation pattern, A**_{DIRI}** being the displacement of the first - i.e., nearer to the driven element - director and A**_{DIF}** the progressive displacement of each following director in relation to the previous one. In this diagram, the dashed line 31 corresponds to the case where A**_{DIRI}** = 80° and A**_{DIF}** = 0°.The dotted line 32 corresponds to the case where A**_{DIRI}** = 40° and A**_{DIF}** = 0°. Finally, the full line 33 corresponds to the case where A**_{DIRI}** = 5° and A**_{DIF}** = 20°. This latter arrangement is shown in lateral (elevation) view in Figure 10, where it can be seen that the driven element 11 is positioned on the longitudinal axis 15, the first director 12a being tilted 5° in relation to said axis, the second director 12b tilt being an additional 20° in relation to the previous (i.e., 12a) director, totaling a 25° tilt in relation to axis 15, and so on, directors 12c and 12d totaling tilts of 45° and 65° respectively, in relation to axis 15. As shown in Figure 9, the corresponding curve is the one that presents a more pronounced null, near elevation of 35° while the maximum gain is almost identical for the various arrangements above described.

Usually, the best results as regards the desired radiation pattern are obtained with A**_{DIRI}** = 0° and A**_{DIF}** = 5°.

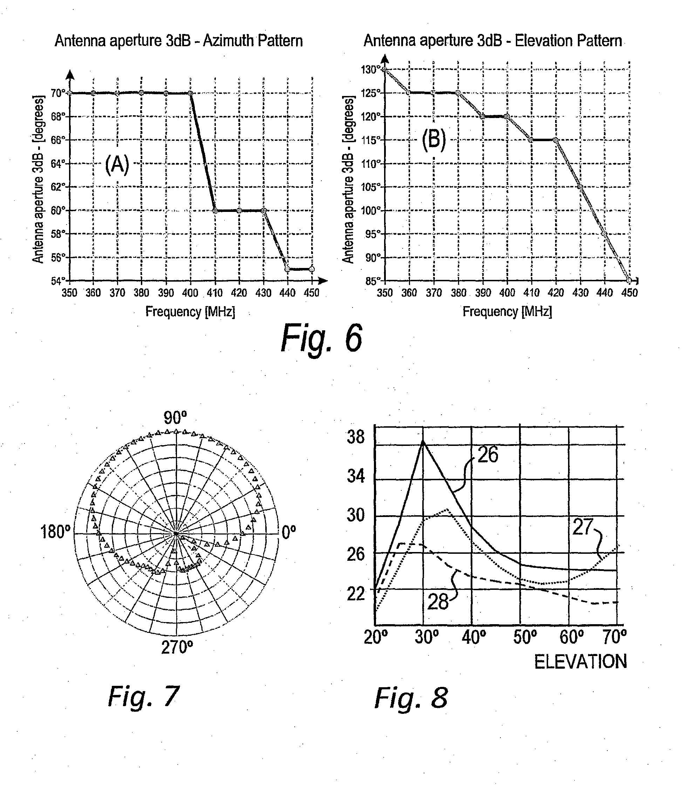

Antennas built according to the invention present an increase of bandwidth of about 25%. Therefore, for a central frequency of 40MHz the usable range goes from 350MHz to 450MHz. The influence of frequency on the beamwidth (-3dB points) is shown in Figures 6A and 6B. The first concerns the beamwidth in azimuth, while Figure 6B shows the beamwidth variation in elevation; in this figure, the beamwidth is substantially uniform between 350MHz and 420MHz, remaining usable up to 450MHz when the beamwidth is reduced to 85% of the maximum, a value regarded as still usable.

Figure 7 shows the elevation radiation pattern in polar coordinates, for the frequency of 400MHz, while Figure 8 depicts the signal rejection for angles between 20° and 70° for three different frequencies: curve 26 corresponds to the frequency of 40MHz, curve 27 to 350MHz and curve 28 to 450MHz. As shown, the highest value of rejection is obtained with operation at 400MHz, for an angle of 30°.

## Claims

1. **ASYMMETRICAL THREE-DIMENSIONAL RADIATING SYSTEM** with a controlled directional pattern, comprising two Yagi-Uda modified antennas (10, 10'), wherein each antenna comprises:
- a horizontal longitudinal axis (15) having a proximal end and a distal end;
- a horizontal driven dipole element (11) placed between the proximal and distal ends of said horizontal longitudinal axis (15) and perpendicular to it;
- a passive reflecting element (17, 17') placed at the proximal end of said longitudinal axis (15);
- a plurality of directors (12a, 12b, 12c, 12d) consisting of passive parasitic rectilinear conducting elements, parallel to and shorter than said horizontal driven dipole element (11) and placed further forward than it,
**characterized in that** said director elements are spaced along a curved axis (18) with its concavity facing downward and having its proximal portion tangent to said longitudinal axis, whereby the vertical deviations of the directors relative to the longitudinal axis (15) of the antenna increase gradually in proportion to the distance of the directors to said driven dipole (15), and
said passive reflecting element consisting of a conductive reflecting surface (17, 17') substantially perpendicular to said longitudinal axis.

2. **ASYMMETRICAL THREE-DIMENSIONAL RADIATING SYSTEM** as claimed in claim 1, wherein the longitudinal axes (15) of said antennas are pointed in opposite horizontal directions.

3. **ASYMMETRICAL THREE-DIMENSIONAL RADIATING SYSTEM** as claimed in claim 2, wherein each said longitudinal axis (15) is substantially perpendicular to each side (17, 17') of the fuselage (16) of an aircraft that carries said radiating system, said longitudinal axes directions being traverse to the aircraft longitudinal axis.

4. **ASYMMETRICAL THREE-DIMENSIONAL RADIATING SYSTEM** as claimed in claim 1, wherein said driven dipole element (11) as well as said director elements (12) are provided by metal rods.

5. ASYMMETRICAL THREE-DIMENSIONAL RADIATING SYSTEM as claimed in claim 4, wherein said metal rods (11, 12) are cylindrical.

6. **ASYMMETRICAL THREE-DIMENSIONAL RADIATING SYSTEM** as claimed in claim 1, wherein for each antenna (10, 10') said driven dipole element (11) is fed by a balanced transmission line (13) comprising two conductors (24, 25) parallel to the antenna's longitudinal axis (15), the proximal ends of said conductors being connected to the balanced terminals (22, 23) of a microstrip balun (14).

7. **ASYMMETRICAL THREE-DIMENSIONAL RADIATING SYSTEM** as claimed in claim 1, wherein said balun (14) is turned down 90° in relation to the longitudinal axis (15) and is modified to be more compact than the equivalent used in a Quasi-Yagi (QY) antenna.

8. **ASYMMETRICAL THREE-DIMENSIONAL RADIATING SYSTEM** as claimed in claim 1, wherein the director (12a) nearest to the driven dipole element (11) is tilted by a first angle (A_{DIRI}) in relation to said longitudinal axis (15), each following director (12b, 12c, 12d) being progressively tilted relative to the previous one by the same second angles (A_{DIF}).

9. **ASYMMETRICAL** THREE-DIMENSIONAL **RADIATING SYSTEM** as claimed in claim 8, wherein the first director (12a) tilt angle (A_{DIRI}) is 0° and the subsequent directors are tilted by increments (A_{DIF}) of 5°.

## Patentansprüche

1. Assymmetrisches dreidimensionales Strahlungssystem, **dadurch gekennzeichnet, dass** es ein gesteuert Richtungsmodell aufweist, und aus zwei geänderten YagiUda Antennen (10, 10') besteht, wobei jede Antenne schliesst ein:
- Eine waagrechte in Längsrichtungen waagrechte Achse (15) mit einer proximalen Ende und einer distalen Ende;
- Ein dipolares waagrechtes Element (11) zwischen der proximalen und distalen Enden vom oben gezeigten waagrechten in Längsrichtungen Achse (15) gesetzt, und senkrecht zu dieser letzter;
- Ein Reflektor passives Element (17, 17') in der proximalen Ende der obenen in Längsrichtungen Achse (15) gesetzt;
- Eine Mehrheit von geradlinigen parasiten passiven Leitfaden (12a, 12b, 12c, 12d) parallel zu und viel kleiner als das dipolare waagrechte Element (11) und ferner gesetzt,
**dadurch gekennzeichnet, dass** die ebene Leitfaden Elementen entfernt über eine ganze gebogene Achse (18) gesetzt werden, mit ihrer Konkavität die Basis zugewandt und mit ihrer proximalen Portion tangential zu der obenen in Längsrichtungen Achse, gemäss der wesentlichen Zunahme der senkrechten Abweichungen der Leitfaden relativ zu der in Längsrichtungen Achse (15) der Antenne in Porportion zu dem Abstand der Leitfaden zu dem dipolaren waagrechten Element (11), und das ebene passive Reflektor Element weist eine reflektierende leitfähige Oberfläche (17, 17') wesentlichen senkrecht zu der obenen in Längsrichtungen Achse.

2. Assymmetrisches dreidimensionales Strahlungssystem nach Anspruch 1, wobei die in Längsrichtungen Achsen (15) der obene Antennen auf entgegengesetzte Richtungen zu der waagrechte Richtungen aufgezeigt werden.

3. Assymmetrisches dreidimensionales Strahlungssystem nach Anspruch 2, wobei jede von den obenen in Längsrichtungen Achsen (15) wesentlichen senkrecht auf jeder Seite (17, 17') des Flugzeugrumpfs (16), der das Strahlungssystem trägt, wobei die obene in Längsrichtungen Achsen quer zu Langsachse des Fleugzeugs ist.

4. Assymmetrisches dreidimensionales Strahlungssystem nach Anspruch 1, wobei das obene dipolare waagrechte Element (11), sowie die obene Leitfaden (12) Elementen, Metallstäbe vorgesehen werden.

5. Assymmetrisches dreidimensionales Strahlungssystem nach Anspruch 4, wobei die Metallstäbe (11, 12) zylindrisch sind.

6. Assymmetrisches dreidimensionales Strahlungssystem nach Anspruch 1, wobei auf jede Antenne (10, 10') das obene dipolare waagrechte Element durch eine ausgegliche Übertragungsleitung, die aus zwei Leitfaden (24, 25) parallel zur in Längsrichtungen Achse der Antenne (15) besteht, zugeführt wird, wobei die proximalen Enden der obenen Leitfaden an den ausgeglichen terminals (22, 23) mit einem Mikrostreifen-Symmetrie (14) verbunden sind.

7. Assymmetrisches dreidimensionales Strahlungssystem nach Anspruch 1, wobei der obene Mikrostreifen-Symmetrie (14) 90° niedriger gemäss der in Längsrichtungen Achse (15) ist, und auch geändert ist, weil sie kompakter ist als ihr verwendete Entsprechung für eine Quasi - Yagi Antenne (QY).

8. Assymmetrisches dreidimensionales Strahlungssystem nach Anspruch 1, wobei der Leitfaden (12a), der nährer des dipolaren waagrechten Element (11) ist, geneigt ist in einem ersten Winkel (A_{DIRI}) relativ zu der obenen in Längsrichtungen Achse (15), wobei jede folgende Leitfaden (12b, 12c, 12d) wesentlichen geneigt ist, relativ zum letzen nach dieselben zweiten Winkeln (A_{DIF}).

9. Assymmetrisches dreidimensionales Strahlungssystem nach Anspruch 8, wobei der des Leitfadens (12a) erste geneigte Winkel (A_{DIRI}) 0° ist, und die folgende Leitfaden sind durch 5° Erhöhungen (A_{DIF}) geneigt.

## Revendications

1. Système rayonnant tridimensionnel asymétrique, caractérisé avec un modèle directionnel contrôlé, comprenant deux antennes Yagi-Uda (10, 10') modifiées, dans lequel chaque antenne comprend:
- un axe longitudinal horizontal (15) avec une extrémité proximale et une extrémité distale;
- un élément dipôle entraîné horizontal (11) placé entre les extrémités proximale et distale du dit axe longitudinal horizontal (15) et perpendiculaire par rapport à ce dernier;
- un élément réflecteur passive (17, 17') placé à l'extrémité proximale du dit axe longitudinal (15);
- une pluralité de directeurs (12a, 12b, 12c, 12d) comprenant des éléments conducteurs, rectilignes, parasites, passives, en parallèle avec et plus court que le dit élément dipôle entraîné horizontal (11) et placé plus en avant que ce dernier, **caractérise en ce que** les dits éléments directeurs sont espacés le long d'un axe incurvé (18), avec sa concavité tournée vers le bas et sa partie proximale tangent au dit axe longitudinal, selon lequel les déviations verticaux des directeurs par rapport au axe longitudinal (15) de l'antenne augmentent progressivement en proportion de la distance des directeurs audit dipôle entraîné (15), et le dit élément réflecteur passive comprend une surface réfléchissante conductrice (17, 17') substantiellement perpendiculaire audit axe longitudinal.

2. Système rayonnant tridimensionnel asymétrique selon la revendication 1, dans lequel les axes longitudinaux (15) des dites antennes sont pointés dans le sens opposé des directions horizontales.

3. Système rayonnant tridimensionnel asymétrique selon la revendication 2, dans lequel chaque dit axe longitudinal (15) est substantiellement perpendiculaire à chaque côté (17, 17') du fuselage (16) d'un aéronef qui transporte le dit système rayonnant, les dits axes longitudinaux étant transversaux au axe longitudinal de l'aéronef.

4. Système rayonnant tridimensionnel asymétrique selon la revendication 1, dans lequel le dit élément dipôle entraîné (11), ainsi que les dites éléments directeurs (12) sont fournis par tiges de métal.

5. Système rayonnant tridimensionnel asymétrique, selon la revendication 4, dans lequel les dites tiges de métal (11, 12) sont cylindriques.

6. Système rayonnant tridimensionnel asymétrique selon la revendication 1, dans lequel pour chaque antenne (10, 10') le dit élément dipôle entraîné (11) est alimenté par une ligne de transmission équilibrée (13) comprenant deux conducteurs (24, 25) parallèles au axe longitudinal de l'antenne (15), les extrémités proximaux des dits conducteurs sont connectées aux terminaux équilibrés (22, 23) d'un *balun* microruban (14) .

7. Système rayonnant tridimensionnel asymétrique selon la revendication 1, dans lequel le dit *balun* (14) est abaissé 90° par rapport au axe longitudinal (15) et est modifié en vue d'être plus compact que l'équivalent utilisé dans une antenne Quasi-Yagi (QY).

8. Système rayonnant tridimensionnel asymétrique selon la revendication 1, dans lequel le directeur (12a) plus proche du élément dipôle entraîné (11) est incliné dans un première angle (A_{DIRI}) par rapport audit axe longitudinal (15), chaque directeur suivant (12b, 12c, 12d) est progressivement incliné par rapport au dernier selon les mêmes deuxième angles (A_{DIF}).

9. Système rayonnant tridimensionnel asymétrique, selon la revendication 8, dans lequel le première angle (A_{DIRI}) incliné du directeur (12a) est 0° et les directeurs suivants sont inclinés par augmentations (A_{DIF}) de 5°.
